# EUROPEAN PATENT APPLICATION

(11) **EP 4 160 375 A1**
(43) Date of publication of application: **05.04.2023**
(21) Application number: 21812913.8
(22) Date of filing: 26.05.2021
(51) Int. Cl.: G06F 3/0484, G06F 9/451

(54) **PAGE SWITCHING METHOD AND APPARATUS, AND ELECTRONIC DEVICE**

(30) Priority: 29.05.2020 CN 202010477682
(71) Applicant: Vivo Mobile Communication Co., Ltd., Dongguan, Guangdong 523863 (CN)
(72) Inventor: SHAO, Di, Dongguan, Guangdong 523863 (CN)
(74) Representative: Raffay & Fleck
(86) International application number: PCT/CN2021/096189
(87) International publication number: WO 2021/239018

(57) **Abstract**

Disclosed are a page switching method and apparatus, an electronic device, and a chip, which belong to the technical field of communications. The method comprises: when a first function page of a target application program is displayed and N first tags are displayed, receiving a first input from a user, wherein the N first tags are displayed on the first function page, each first tag respectively corresponds to a first identifier in the target application program, and the first input is an input from the user regarding a target tag among the N first tags; and in response to the first input, performing switching from the first function page to a second function page, wherein the second function page is a function page of a first application function in the target application program, and the first application function is an application function among M application functions corresponding to a target identifier.

## Description

### CROSS-REFERENCE TO RELATED APPLICATIONS

This application claims priority to Chinese Patent Application No.202010477682.0 filed in China on May 29, 2020, which is incorporated herein by reference in its entirety.

### TECHNICAL FIELD

This application belongs to the field of communications technologies, and specifically relates to a page switching method and apparatus and an electronic device.

### BACKGROUND

Generally, when a user uses a chat application program in an electronic device, for example, views friend updates on a page corresponding to a friend update function of the chat application program, if the electronic device receives a message sent by a contact in the chat application program, to reply to the message sent by the contact in a timely manner, the user can trigger the electronic device to exit from the page corresponding to the friend update function, and then trigger the electronic device to display a message page corresponding to the contact to view the message sent by the contact, to reply to the contact.

However, in the above method, each time after the electronic device receives the message sent by the contact person, the user needs to input for many times to enable the electronic device to display the message page corresponding to the contact. Therefore, the user's operation is cumbersome and time-consuming, and the electronic device is inefficient in switching pages in the application program.

### SUMMARY

The embodiments of this application provide a page switching method and apparatus and an electronic device, which can solve the problem of low efficiency of switching pages in an application program in the electronic device.

To resolve the foregoing technical problem, this application is implemented as follows:

According to a first aspect, the embodiments of this application provide a page switching method, which includes: receiving a first input of a user in a case that a first function page of a target application program is displayed and N first labels are displayed, where the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1; and in response to the first input, switching the first function page to a second function page, where the second function page is a function page of the first application function in the target application program, the first application function is one of M application functions corresponding to the target identifier, the target identifier is an identifier that corresponds to the target label and that is of the N first identifiers, and M is a positive integer.

According to a second aspect, the embodiments of this application provide a page switching apparatus, which includes a receiving module and a switching module. The receiving module is configured to receive a first input of a user in a case that a first function page of a target application program is displayed and N first labels are displayed, where the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1. The switching module is configured to: in response to the first input received by the receiving module, switch the first function page to a second function page, where the second function page is a function page of the first application function in the target application program, the first application function is one of M application functions corresponding to the target identifier, the target identifier is an identifier that corresponds to the target label and that is of the N first identifiers, and M is a positive integer.

According to a third aspect, an embodiment of the present application provides an electronic device, where the electronic device includes a processor, a memory, and a program or an instruction stored in the memory and capable of running on the processor, and when the program or the instruction is executed by the processor, the steps of the method according to the first aspect are implemented.

According to a fourth aspect, an embodiment of the present application provides a readable storage medium, where the readable storage medium stores a program or an instruction, and when the program is executed by a processor, the steps of the access method according to the first aspect are implemented.

According to a fifth aspect, an embodiment of this application provides a chip, where the chip includes a processor and a communications interface, the communications interface is coupled to the processor, and the processor is configured to run a program or an instruction to implement the method according to the first aspect.

In the embodiments of this application, when the electronic device displays the first function page of the target application program, the user can perform the first input to trigger the electronic device to switch the first function page to the second function page. Since the electronic device can display N first labels on the first function page and each of the first labels corresponds to an application function page of the target application program, the user can perform input on any one of the N first labels, so that the electronic device can quickly switch from the first function page to other application function pages of the target application program based on the user's input. Therefore, the user's operation can be simplified and time consumption can be reduced, thereby improving the efficiency of switching function pages in the application program in the electronic device.

### BRIEF DESCRIPTION OF DRAWINGS

FIG. 1 is a first schematic diagram of a page switching method provided by an embodiment of this application;
FIG. 2 is a second schematic diagram of a page switching method provided by an embodiment of this application;
FIG. 3 is a first schematic diagram of an example of an interface of a mobile phone provided by an embodiment of this application;
FIG. 4 is a second schematic diagram of an example of an interface of a mobile phone provided by an embodiment of this application;
FIG. 5 is a third schematic diagram of a page switching method provided by an embodiment of this application;
FIG. 6 is a third schematic diagram of an example of an interface of a mobile phone provided by an embodiment of this application;
FIG. 7 is a fourth schematic diagram of an example of an interface of a mobile phone provided by an embodiment of this application;
FIG. 8 is a fourth schematic diagram of a page switching method provided by an embodiment of this application;
FIG. 9 is a fifth schematic diagram of an example of an interface of a mobile phone provided by an embodiment of this application;
FIG. 10 is a fifth schematic diagram of a page switching method provided by an embodiment of this application;
FIG. 11 is a sixth schematic diagram of an example of an interface of a mobile phone provided by an embodiment of this application;
FIG. 12 is a first schematic structural diagram of a page switching apparatus provided by an embodiment of this application;
FIG. 13 is a second schematic structural diagram of a page switching apparatus provided by an embodiment of this application;
FIG. 14 is a third schematic structural diagram of a page switching apparatus provided by an embodiment of this application; and
FIG. 15 is a schematic structural diagram of hardware of an electronic device provided by an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of the present application without creative efforts shall fall within the protection scope of the present application.

In the specification and the claims of this application, the terms "first", "second", and the like are intended to distinguish between similar objects but do not describe a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

The page switching method provided in the embodiments of the present application is described in detail below through specific embodiments and application scenarios thereof with reference to the accompanying drawings.

In the embodiments of this application, when an electronic device displays a function page (such as function page a) of an application program, if the user needs to view another function page (such as function page b) of the application program to view display content of the function page b, the user does not need to trigger the electronic device to exit from function page a in the traditional method, and then perform input on a corresponding control of function page b, to trigger the electronic device to display function page b, so that the display content in the function page b can be viewed. Instead, in this solution, when the function page a is displayed, multiple labels can be displayed on the function page a (for example, label A corresponding to the function page a and label B corresponding to the function page b), and the user can perform input on the label B with gestures to trigger the electronic device to directly switch the function page a to the function page b, so that the display content in the function page b can be viewed quickly. Therefore, the user's operation is simplified, and the efficiency of switching the function page in the application program of the electronic device is improved.

For example, in a specific implementation, it is assumed that the user is using a chat application program in the electronic device, a page currently displayed by the electronic device is a friend update display page in the chat application program, and two labels are displayed on the friend update display page: label A corresponds to the friend update display page, and label B corresponds to a contact conversation interface. When the user browses friend update information through the friend update display page, if the electronic device receives a chat message sent by the contact, the user can directly click on the label B corresponding to the contact conversation interface to trigger the electronic device to directly switch the friend update display page to the contact conversation interface, so as to quickly view the chat message sent by the contact.

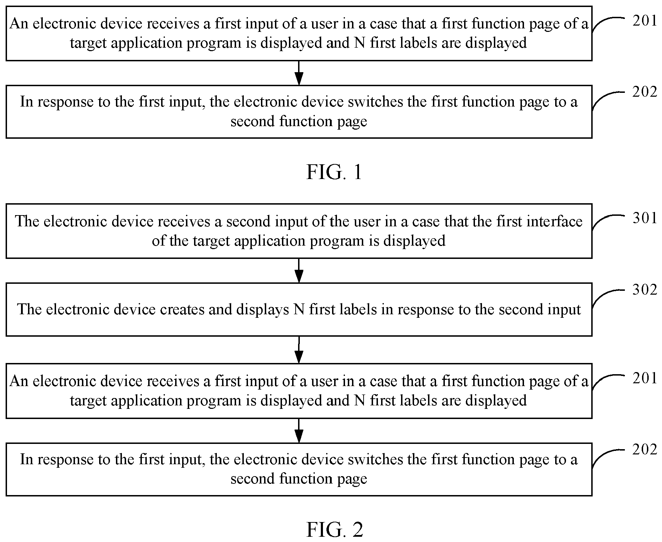

The embodiments of the application provide a page switching method. FIG. 1 is a flowchart of a page switching method provided by an embodiment of this application, which can be applied to an electronic device. As shown in FIG. 1, the page switching method provided by the embodiments of the application can include the following steps 201 and 202.

Step 201: An electronic device receives a first input of a user in a case that a first function page of a target application program is displayed and N first labels are displayed.

In the embodiments of this application, the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1.

Optionally, in the embodiments of this application, the target application program can include multiple first identifiers. The first function page is a function page corresponding to one of at least one application function indicated by one of the multiple first identifiers.

Optionally, in the embodiments of this application, the N first labels can be labels created by users for some first identifiers in the target application program in advance.

It should be noted that each first identifier is used to indicate an interface in the target application program, each interface includes at least one application function identifier, and each application function identifier is used to indicate a function page corresponding to an application function.

Optionally, in the embodiments of this application, for each of the N first labels, the electronic device can run, through the first label, any one application function of the first identifier corresponding to the first label, so that after the user performs input on the first label, the electronic device can display a function page of the any one application function.

Optionally, in the embodiments of this application, the user can perform setting input on a setting page to trigger the electronic device to be in an operation mode of displaying the first label, so that the electronic device displays N first labels when displaying the first function page of the target application program (that is, when running the target application program).

Optionally, in the embodiments of this application, in combination with FIG. 1, as shown in FIG. 2, before the above step 201, the page switching method provided in the embodiments of this application also includes the following steps 301 and 302.

Step 301: The electronic device receives a second input of the user in a case that the first interface of the target application program is displayed.

In the embodiments of this application, the first interface includes K first identifiers, the K first identifiers include N first identifiers, the second input is an input performed by the user on N first identifiers of the K first identifiers, and K is an integer greater than N.

It should be noted that before the user performs the second input, the electronic device is in the traditional operation mode. In the traditional operation mode, N first labels are not displayed in the first interface of the target application program.

Optionally, in the embodiments of this application, the first interface is an interface corresponding to one of the K first identifiers.

Optionally, in the embodiments of this application, the second input can include N sub-inputs (such as a first sub-input and a second sub-input). Each sub-input is an input performed by the user on one of the N first identifiers, so that the electronic device can create the first label corresponding to the first identifier.

Step 302: The electronic device creates and displays N first labels in response to the second input.

Optionally, in the embodiments of this application, the electronic device can create and display the N first labels at the same time, or the electronic device can create and display the N first labels in sequence according to the input sequence of the N sub-inputs.

Optionally, in the embodiments of this application, the electronic device can first respond to the first sub-input to create and display a first label, which is a main label of the N first labels, and an interface corresponding to the main label includes the K first identifiers.

Optionally, in the embodiments of this application, the user can adjust a display sequence of the N first labels so that some first labels required by the user are displayed at the front.

Optionally, in the embodiments of this application, the electronic device can adjust a display sequence of the N first labels according to an operation frequency of an application function corresponding to each of the N first labels, so as to display the N first labels in descending order of the operation frequencies of the first labels.

Optionally, in the embodiments of this application, the electronic device can switch the first interface to the interface corresponding to one of the N first labels.

Optionally, in the embodiments of this application, the label display form of the N first labels can be any one of the following: displaying labels at a preset position (such as the upper side of the first interface or the left side of the first interface, etc.) or displaying labels in the form of thumbnails.

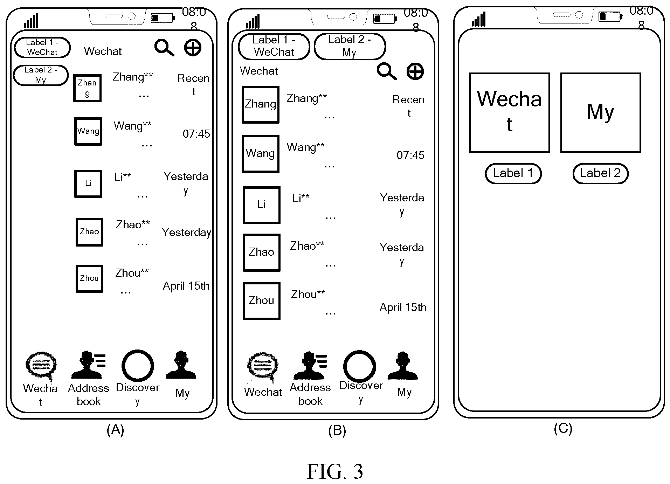

Exemplarily, the following uses an example in which the electronic device is a mobile phone for description. As shown in (A) of FIG. 3, when the mobile phone displays a recent contact interface (that is, the first interface) of the chat application program, the mobile phone can display N first labels in the left area of the recent contact interface; or as shown in (B) of FIG. 3, when the mobile phone displays the recent contact interface of the chat application program, the mobile phone can display N first labels in the upper area of the recent contact interface; or as shown in (C) of FIG. 3, the mobile phone can display N first labels in the form of thumbnails. Label 1 corresponds to the recent contact interface, and label 2 corresponds to the user identifier interface.

Optionally, in the embodiments of this application, the user can select and input a label display form of the N first labels, so that after creating N first labels, the electronic device can display the N first labels in the label display form selected by the user.

Optionally, in the embodiments of this application, after the electronic device creates and displays the N first labels, the user can input in an interface corresponding to any one of the N first labels, so that the electronic device can display a function page corresponding to one of at least one application function indicated by the first identifier corresponding to any first label.

It should be noted that for each of the N first labels, after the electronic device displays an interface corresponding to one of the N first labels, the user can input, so that the electronic device can display a function page corresponding to one of at least one application function indicated by the first identifier corresponding to the first label.

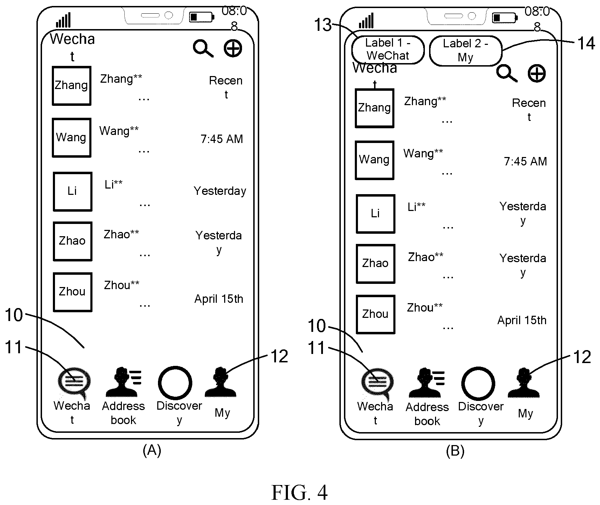

For example, in combination with (B) of FIG. 3, as shown in (A) of FIG. 4, when the mobile phone displays the recent contact interface 10 of the chat application program, the user can perform input on recent contact identifier 11 and user identifier 12. As shown in (B) of FIG. 4, the mobile phone can create and display label 13 corresponding to the recent contact identifier 11 and label 14 corresponding to the user identifier 12 in the recent contact interface 10, so that the user can perform input on label 13 or label 14 to trigger the mobile phone to display a function page in the recent contact identifier 11 or a function page in the user identifier 12.

In the embodiments of this application, the user can may perform input on multiple first identifiers in the first interface of the target application program, so that the electronic device can create a first label corresponding to each of the multiple first identifiers to display multiple first labels in the first interface. Therefore, the user can perform input on the multiple first labels, so that the electronic device can switch between different function pages.

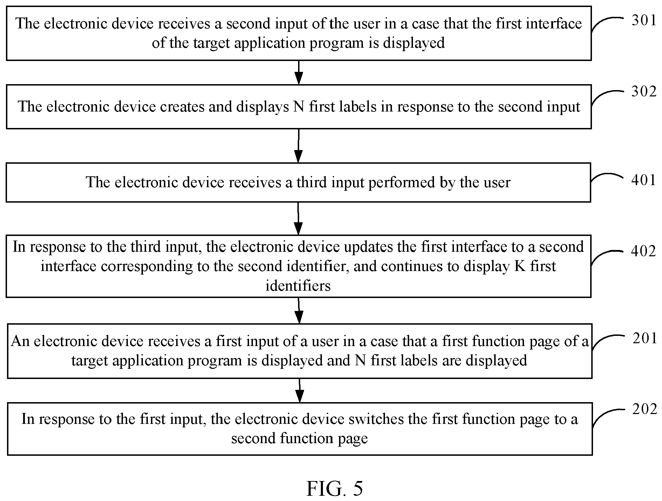

Optionally, in the embodiments of this application, in combination with FIG. 2, as shown in FIG. 5, after the above step 302, the page switching method provided in the embodiments of this application also includes the following steps 401 and 402.

Step 401: An electronic device receives a third input of a user.

Optionally, in the embodiments of this application, the user can perform input on one of the N first labels displayed in the first interface, so that the electronic device can switch the first interface to an interface corresponding to the third label.

Step 402: In response to the third input, the electronic device updates the first interface to a second interface corresponding to the second identifier, and continues to display K first identifiers.

In the embodiments of this application, the second identifier is an identifier corresponding to the third label, and the second interface includes an identifier of at least one application function indicated by the second identifier.

It should be noted that the electronic device updates the first interface to the second interface, which can be understood as: the electronic device updates the content displayed on the first interface to obtain the second interface; or the electronic device switches the first interface to the second interface.

Optionally, in the embodiments of this application, the second interface can include K first identifiers, so that the user can trigger the electronic device to display, on the second interface, a function page corresponding to one of at least one application function indicated by each of the K first identifiers.

It can be understood that when the electronic device displays the interface corresponding to any one of the N first labels, the electronic device can still display the K first identifiers.

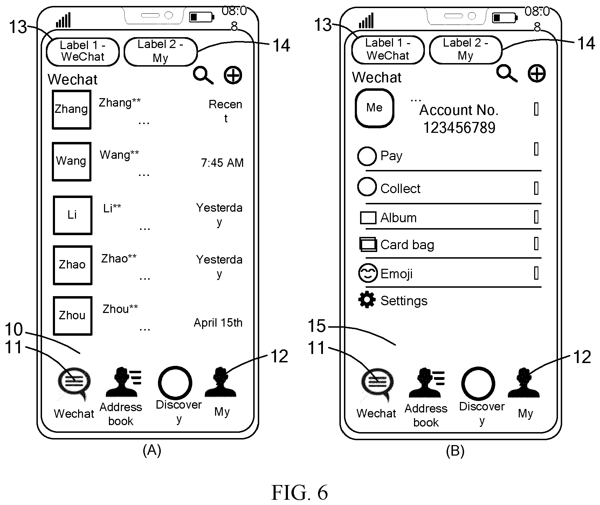

For example, in combination with (B) of FIG. 4, as shown in (A) of FIG. 6, when the mobile phone displays the recent contact interface 10 of the chat application program, the user can click on the label 14, as shown in (B) of FIG. 6, the mobile phone can switch the recent contact interface 10 to the user identifier interface 15 corresponding to the label 14. The user identifier interface 15 includes the recent contact identifier 11, a user identifier 12, an address book identifier, and a discovery identifier (that is, multiple first identifiers).

Optionally, in the embodiments of this application, when the electronic device keeps displaying the K first identifiers, the electronic device can obtain a temperature change of the electronic device. If a temperature of the electronic device is greater than or equal to a preset temperature, the electronic device can cancel displaying the K first identifiers.

It should be noted that when the electronic device keeps displaying the K first identifiers, the electronic device is in operation mode 1, which requires high performance of the central processing unit (CPU) of the electronic device, that is, the operation mode 1 of the electronic device allows the application program in a page corresponding to each label (that is, the first label) to run independently, the operations on label pages of this application program do not affect each other. (In this case, each label page corresponds to an independent application program). The mode 1 is applicable to the electronic device with sufficient power and has high performance requirement on the electronic device. Since each label is independent, the requirements on the performance and memory resources of the CPU of the electronic device are relatively high. When the electronic device cancels displaying the K first identifiers, the electronic equipment is in operation mode 2, and the operation mode 2 has low performance requirements on the CPU of the electronic device. That is, when the electronic device runs the application program in operation mode 2, the page corresponding to each label can flexibly display each application function in the application program (in this case, the main program is one program, and the page corresponding to each label is only a function page of one application function). The mode 2 is applicable when the power of the electronic device is insufficient and the CPU memory and other resources of the electronic device are insufficient.

In the embodiments of this application, the user can perform input on one of the N first labels when the electronic device displays the first interface of the target application program, so that the electronic device can quickly switch the first interface to the interface corresponding to the first label, thus improving the efficiency of switching pages in the application program in the electronic device.

Step 202: In response to the first input, the electronic device switches the first function page to a second function page.

In the embodiments of this application, the second function page is a function page of the first application function in the target application program, the first application function is one of M application functions corresponding to the target identifier, the target identifier is an identifier that corresponds to the target label and that is of the N first identifiers, and M is a positive integer.

Optionally, in the embodiments of this application, the first application function is an application function meeting a preset condition among the M application functions. The preset condition includes at least one of the following: an application function that keeps running among the M application functions, an application function that has been used for a time closest to the current system time among the M application functions, an application function that has been used for the most times among the M application functions, an application function that has been used the most frequently among the M application functions, and an application function that has been used for the longest time among the M application functions.

It should be noted that the above application function that keeps running can be understood as: an application function run by the electronic device in the background through the target label; the above application function used at the latest time can be understood as: the latest application function run by the electronic device through the target label (that is, the last application function run before the current time). The latest running application function can be understood as: among the multiple application functions that the electronic device has run through the target label, an application function with the smallest difference between the exit time and the current system time.

Optionally, in the embodiments of this application, the electronic device can run the first function in the background, so that when the user triggers the electronic device to display the first function page again, the electronic device does not need to reload the first function page, so that the first function page can be displayed directly.

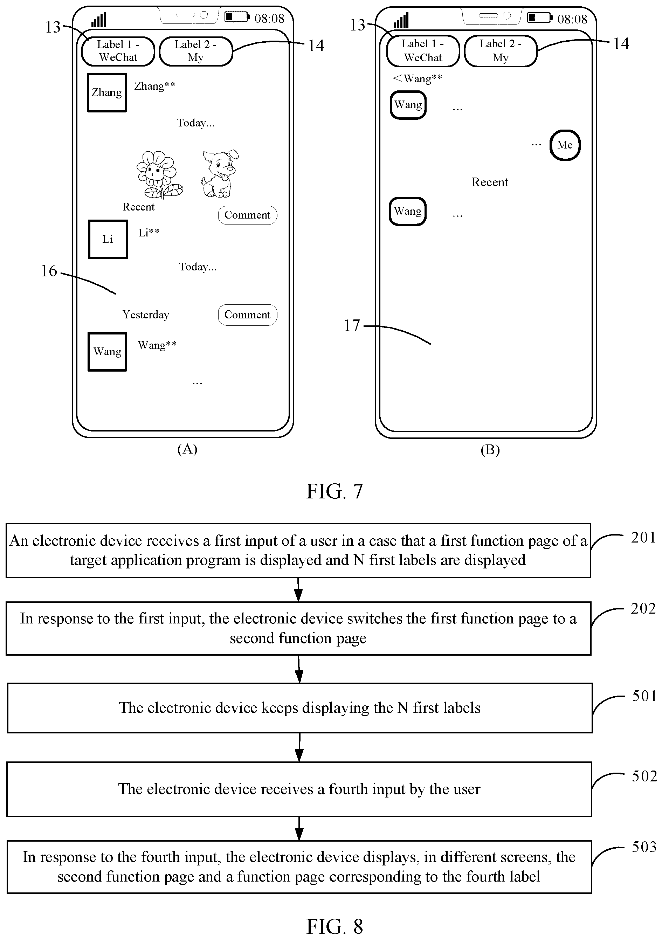

By way of example, in combination with (B) of FIG. 4, as shown in (A) of FIG. 7, when the mobile phone displays a friend update display page 16 (that is, a function page corresponding to a friend update function among the multiple application functions indicated by the discovery identifier), if the mobile phone receives information sent by contact a in the chat application program, the user can click on label 13, as shown in (B) of FIG. 7, the mobile phone can switch the friend update display page 16 to the conversation page 17 of contact a, so that the user can quickly view the information sent by contact a and reply to the information in a timely manner.

The embodiments of this application provide a page switching method. When the electronic device displays the first function page of the target application program, the user can perform the first input to trigger the electronic device to switch the first function page to the second function page. Since the electronic device can display N first labels on the first function page and each of the first labels corresponds to an application function page of the target application program, the user can perform input on any one of the N first labels, so that the electronic device can quickly switch from the first function page to other application function pages of the target application program based on the user's input. Therefore, the user's operation can be simplified and time consumption can be reduced, thereby improving the efficiency of switching function pages in the application program in the electronic device.

Optionally, in the embodiments of this application, in combination with FIG. 1, as shown in FIG. 8, after the above step 202, the page switching method provided in the embodiments of this application also includes the following steps 501 to 503.

Step 501: The electronic device keeps displaying the N first labels.

In the embodiments of this application, after the electronic device switches the first function page to the second function page, the electronic device can continue to display the N first labels on the screen.

Step 502: The electronic device receives a fourth input of the user.

In the embodiments of this application, the fourth input is an input performed by the user on the fourth label of the N first labels.

Optionally, in the embodiments of this application, the fourth input can be any one of the following: a drag input performed by the user on the fourth label, a long press input performed by the user on the fourth label, a preset number of continuous click inputs performed by the user on the fourth label, and so on.

Step 503: In response to the fourth input, the electronic device displays, in a split screen manner, the second function page and a function page corresponding to the fourth label.

Optionally, in the embodiments of this application, the electronic device can divide a screen display area into two display areas (such as a first display area and a second display area), so that the second function page and the function page corresponding to the fourth label are displayed in the first display area and the second display area respectively.

It should be noted that the user can perform input on multiple first labels (such as three first labels) of the N first labels, so that the electronic device can divide the screen display area into multiple display areas (such as three display areas) to display, in the multiple display areas, function pages corresponding to the multiple first labels.

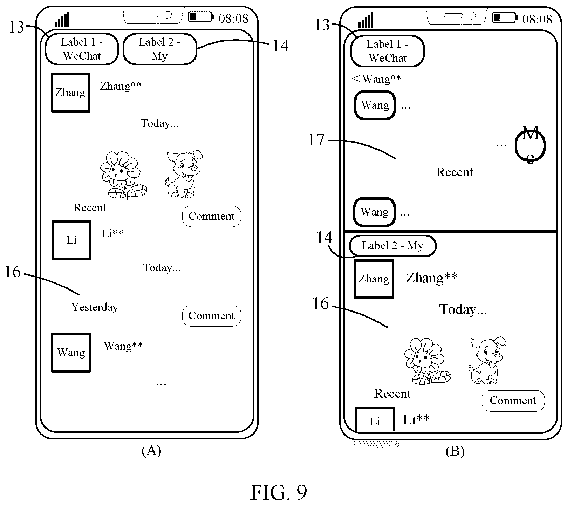

For example, in combination with (B) in FIG. 4, as shown in (A) of FIG. 9, when the mobile phone displays the friend update display page 16 through the label 14 and the mobile phone runs the conversation page of contact a in the background through the label 13, the user can drag the label 13 (for example, drag the label 13 to a preset position on the screen), as shown in (B) of FIG. 9, and the phone can display the conversation page 17 of the contact a and the friend update display page 16 in a split screen manner, so that the user can view content displayed on the conversation page 17 of the contact a and the friend update display page 16 at the same time.

In the embodiments of this application, when the electronic device displays the second function page, the user can perform input on a first label of the N first labels, so that the electronic device can display the second function page and a corresponding function page of the first label in a split screen manner (that is, two function pages are displayed at the same time), so that the user can view display contents of the two function pages at the same time. Thus, the electronic device can display function pages more efficiently.

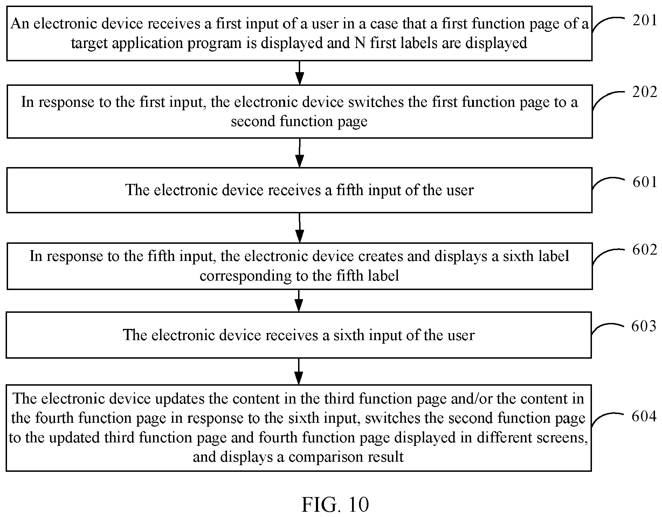

Optionally, in the embodiments of this application, in combination with FIG. 1, as shown in FIG. 10, after the above step 202, the page switching method provided in the embodiments of this application also includes the following steps 601 to 604.

Step 601: The electronic device receives a fifth input of the user.

In the embodiments of this application, the fifth input is an input performed by the user on the fifth label of the N first labels.

In the embodiments of this application, the user can perform a fifth input (such as long press input) on the first label (such as the fifth label) of the N first labels to trigger the electronic device to copy the fifth label.

Step 602: In response to the fifth input, the electronic device creates and displays a sixth label corresponding to the fifth label.

In the embodiments of this application, a third function page corresponding to the sixth label is the same as a fourth function page corresponding to the fifth label.

In the embodiments of this application, the electronic device can obtain the function page corresponding to the fifth label (that is, corresponding to the same first label, and corresponding to the same application function in the first label), and create the sixth label based on the function page, so that the user can perform input on the sixth label, so that the electronic device can display the function page corresponding to the sixth label.

Step 603: The electronic device receives a sixth input of the user.

In the embodiments of this application, the sixth input is an input performed by the user on the fifth label and the sixth label.

Step 604: The electronic device updates content in the third function page and/or content in the fourth function page in response to the sixth input, and switches the second function page to the updated third function page and fourth function page displayed in a split screen manner and displays a comparison result.

In the embodiments of this application, the comparison result is a result of comparing the content in the third function page and the content in the fourth function page.

Optionally, in the embodiments of this application, the sixth input can include multiple sub-inputs (such as a third sub-input and a fourth sub-input). The third sub-input is used to trigger the electronic device to update the content in the third function page and/or the content in the fourth function page, so that the content displayed in the third function page is different from the content displayed in the fourth function page. The fourth sub-input is used to trigger the electronic device to display the updated third function page and the fourth function page in a split screen manner, so that the user can compare the contents of the third function page and the fourth function page.

Optionally, in the embodiments of this application, the content in the third function page and the content in the fourth function page can include at least one of the following content types: text type, picture type, video type, etc.

Optionally, in the embodiments of this application, the electronic device can compare the content of the same content type in the third function page and the fourth function page to obtain and display the comparison result.

It can be understood that when the electronic device displays N first labels, the electronic device supports the copy of the label page (that is, the page corresponding to the first label). For example, when the user uses a food section of an application program through a first label, after the user finds a favorite restaurant, the user may select to copy the first label to another label, and then the electronic device can create a new label to display the food section, and display a current content page on the new label. This makes it convenient for a user to effectively select candidate favorite restaurants, and then simply switch labels to perform further selection. In addition, the electronic device can support the comparison function of the label page. For example, the user can select a multi-label comparison function by long pressing labels, so that the electronic device can compare the similarity and differences of the same attribute (such as text or picture information) of products in the vertical field (such as clothing, restaurants, and home appliances) according to content currently displayed on each label page, calculate the similarity of the content, and display the comparison results for users to view.

It can be understood that when the N first labels are displayed, the electronic device can copy some first labels through user input, which can effectively help users record overall status information of a label in time and support a comparison function of function pages corresponding to multiple labels, so as to automatically compare texts and images of function page corresponding to each first label selected by users. This reduces time costs of users in comparing goods, news content, prices, and the like.

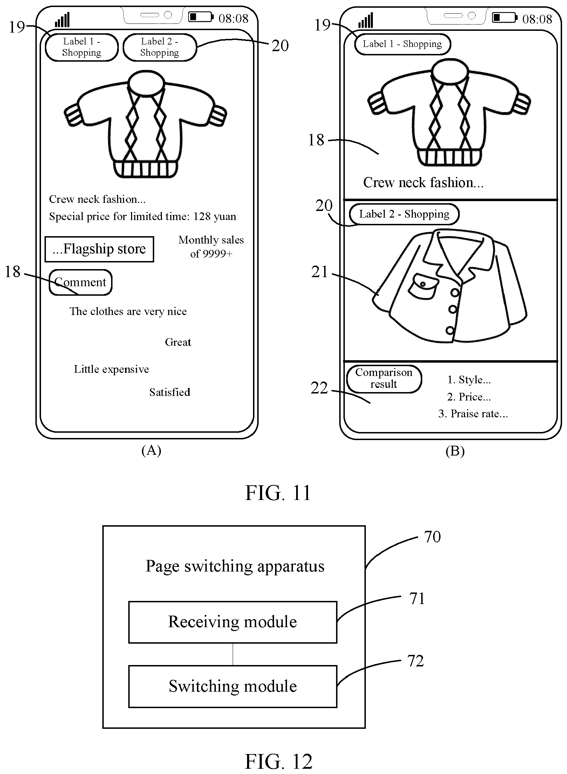

By way of example, in combination with (B) of FIG. 4, as shown in (A) of FIG. 11, it is assumed that the page currently displayed by the mobile phone is a product detail page 18 of article a of business A in a shopping application program, and the product detail page 18 of article a corresponds to a label 19. The user can perform input on the label 19, so that the mobile phone can create the label 20. As shown in (B) of FIG. 11, the user can perform input on the label 19 and the label 20, so that the mobile phone can update the page corresponding to the label 20 to the product detail page 21 of article b of business B in the shopping application program, and display the product detail page 18 of article a and the product detail page 21 of article b in a split screen manner, and display the comparison result 22 of the content in the product detail page 18 of article a and the content in the product detail page 21 of article b. Thus, users can compare article a of business A with article b of business B to view similarities and differences between the two articles.

In the embodiments of this application, the user can perform input on one of the N first labels; so that the electronic device can create a new label corresponding to the label (that is, the function page corresponding to the new label is the same as the function page corresponding to the label), and then the user can perform input on the two labels, so that the electronic device can update the function pages corresponding to the two labels, and display the function pages corresponding to the updated two labels in separate screens, and compare the contents in the function pages corresponding to the two labels and display the comparison results. Therefore, the electronic device can quickly display the similarities and differences of two different pages, which can improve the display efficiency of the electronic device.

Optionally, in the embodiments of this application, before "receiving the first input of the user" in step 201, the page switching method provided in the embodiments of this application also includes the following steps 701 to 703.

Step 701: When the first function page of the target application program is displayed, the electronic device receives first information sent by a network device and displays prompt information corresponding to the first information.

In the embodiments of this application, the first information is used to indicate that the network signal strength of the electronic device is less than or equal to a preset threshold.

Optionally, in the embodiments of this application, the electronic device can display the first information in the form of a pop-up window.

Optionally, in the embodiments of this application, the first information can also be used to indicate that the network signal strength of a first position is less than or equal to a preset threshold, and a distance between the first position and the current position of the electronic device is less than or equal to a preset distance.

Step 702: The electronic device receives a seventh input of the user.

In the embodiments of this application, the seventh input is an input performed by the user on the second label and the target label.

Optionally, in the embodiments of this application, the seventh input is used to trigger the electronic device to display the function page of the application function corresponding to the second label or the function page of the application function corresponding to the target label.

Step 703: In response to the seventh input, the electronic device runs the application function corresponding to the second label and the application function corresponding to the target label, and caches content in the first function page and content in the second function page.

Optionally, in the embodiments of this application, the electronic device can run and display the function page of the application function corresponding to the second label and the function page of the application function corresponding to the target label in turn.

It should be noted that caching the content in the first function page and the content in the second function page can be understood as: when the electronic device has no network, the electronic device can still display the content in the first function page or the content in the second function page.

It can be understood that when displaying N first labels, the electronic device can automatically perceive changes in the environment (such as networks or temperatures), so as to actively perform a content caching operation or a content preload operation, to ensure that users can continue to use the application program when certain environments change. At the same time, for some application functions that require a network, if no network is currently available, when displaying the N first labels, the electronic device may not respond to a network-related service (for example, when the user performs input on some first labels, the electronic device may not respond to the input), or the user may force the electronic device to run a network-related service and in this case the electronic device can display content of history cache without invalid refresh operations.

In the embodiments of this application, the electronic device can receive the first information sent by the network device and display a prompt message indicating that the network signal strength of the electronic device is less than or equal to the preset threshold. The user can perform input according to the prompt message, so that the electronic device can run the application function corresponding to the second label and the application function corresponding to the target label, and cache the content in the first function page and the content in the second function page, thereby improving the efficiency of caching the content in the function page in the electronic device.

Optionally, in the embodiments of this application, before step 201, the page switching method provided in the embodiments of this application also includes the following steps 801 to 803.

Step 801: The electronic device obtains second information.

In the embodiments of this application, the second information includes at least one of the following: historical use information, network status information, and temperature information. The historical use information is used to indicate the user historical use status of the target application program, the network status information is used to indicate the current network status of the electronic device, and the temperature information is used to indicate the current temperature status of the electronic device. Optionally, in the embodiments of this application, the electronic device can obtain the historical use status of the target application program, the historical use status of the application functions in the target application program, and the historical use status of the multiple first labels corresponding to the target application program, to determine display parameters of the multiple first labels to be displayed.

Optionally, in the embodiments of this application, the electronic device can obtain a temperature of a hardware module in the electronic device through a temperature sensor to obtain the temperature information of the electronic device.

Step 802: The electronic device determines, according to the second information, display parameters of multiple first labels to be displayed.

In the embodiments of this application, the display parameter includes at least one of the following: a number of the multiple first labels and a display sequence of the multiple first labels.

Optionally, in the embodiments of this application, the electronic device can determine, according to multiple parameters in the second information, multiple first labels displayed on the screen among all the first labels corresponding to the target application program.

Optionally, in the embodiments of this application, the electronic device can obtain user historical use information of the target application program, to determine the N first labels with the most use times or frequencies among all the first labels corresponding to the target application program, so as to determine the N first labels as multiple first labels to be displayed.

Optionally, in the embodiments of the present application, the electronic device can obtain the network status information of the electronic device, so that when the network status of the electronic device is poor, the electronic device determines multiple first labels with low network requirements among all the first labels corresponding to the target application program, so as to determine the multiple first labels as some of the multiple first labels to be displayed.

Optionally, in the embodiments of this application, the electronic device can obtain the temperature information of the hardware module in the electronic device, so that when the temperature of the hardware module in the electronic device is higher than or equal to the preset temperature, the electronic device determines multiple first labels that have lower requirements on hardware module parameters of the electronic device among all the first labels corresponding to the target application program, so as to determine the multiple first labels as some of the multiple first labels to be displayed.

Step 803: The electronic device displays the multiple first labels according to the display parameters.

Optionally, in the embodiments of this application, when the electronic device displays the interface corresponding to the target application program, the electronic device can display the multiple first labels determined by the electronic device according to the second information.

It should be noted that, the page switching method provided in the embodiments of this application may be performed by a page switching apparatus, or a control module in the page switching apparatus for executing the loading page switching method.

FIG. 12 is a possible schematic structural diagram of a page switching apparatus provided in an embodiment of this application. As shown in FIG. 12, the page switching apparatus 70 may include a receiving module 71 and a switching module 72.

The receiving module 71 is configured to receive a first input of a user in a case that a first function page of a target application program is displayed and N first labels are displayed, where the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1. The switching module 72 is configured to: in response to the first input received by the receiving module 71, switch the first function page to a second function page, where the second function page is a function page of the first application function in the target application program, the first application function is one of M application functions corresponding to the target identifier, the target identifier is an identifier that corresponds to the target label and that is of the N first identifiers, and M is a positive integer.

In one possible implementation, the first application function is an application function meeting a preset condition among the M application functions. The preset condition includes at least one of the following: an application function that keeps running among the M application functions, an application function that has been used for a time closest to the current system time among the M application functions, an application function that has been used for the most times among the M application functions, an application function that has been used the most frequently among the M application functions, and an application function that has been used for the longest time among the M application functions.

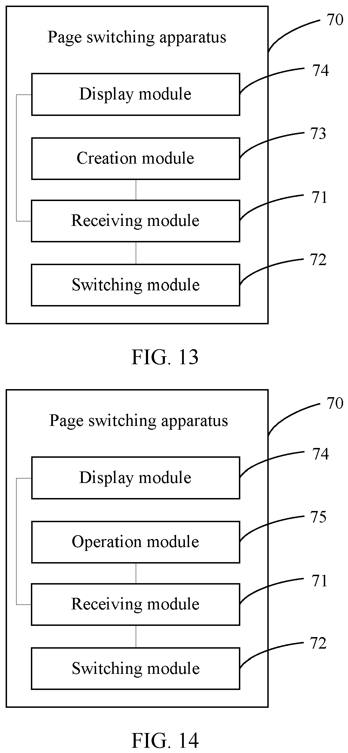

In one possible implementation, the receiving module 71 is also configured to: in a case that the first function page of the target application program is displayed, before the first input of the user is received, in a case that the first interface of the target application program is displayed, receive the second input of the user. The first interface includes K first identifiers, the K first identifiers include N first identifiers, the second input is an input performed by the user on N first identifiers of the K first identifiers, and K is an integer greater than N. In combination with FIG. 12, as shown in FIG. 13, the page switching apparatus 70 provided in the embodiments of this application can also include a creation module 73 and a display module 74. The creation module 73 is configured to create N first labels in response to the second input received by the receiving module 71. The display module 74 is used to display the N first labels created by the creation module 73.

In one possible implementation, the receiving module 71 is also configured to receive the third input of the user after the N first labels are created and displayed. The third input is an input performed by the user on the third label among N first labels. The display module 74 is also configured to: in response to the third input received by the receiving module 71, update the first interface to a second interface corresponding to the second identifier, and keep displaying the K first identifiers. The second interface is an identifier corresponding to the third label. The second interface includes an identifier of at least one application function indicated by the second identifier.

In one possible implementation, the page switching apparatus 70 provided in the embodiments of this application can also include: a display module 74. The display module 74 is configured to keep displaying the N first labels. The receiving module 71 is also configured to receive the fourth input of the user after switching the first function page to the second function page. The fourth input is an input performed by the user on the fourth label among N first labels. The display module 74 is also configured to: in response to the fourth input received by the receiving module 71, display, in a split screen manner, the second function page and the function page corresponding to the fourth label.

In one possible implementation, the receiving module 71 is also configured to receive a fifth input of the user after switching the first function page to the second function page. The fifth input is an input of the user on the fifth label among N first labels. As shown in FIG. 13, the page switching apparatus 70 provided in the embodiments of this application can also include a creation module 73 and a display module 74. The creation module 73 is configured to: in response to the fifth input received by the receiving module 71, create a sixth label corresponding to the fifth label. The third function page corresponding to the sixth label is the same as the fourth function page corresponding to the fifth label. The display module 74 is configured to display the sixth label created by the creation module 73. The receiving module 71 is also configured to receive the sixth input of the user. The display module 74 is also configured to update the content in the third function page and/or the content in the fourth function page in response to the sixth input received by the receiving module 71, switch the second function page to the updated third function page and fourth function page displayed in a split screen manner, and display the comparison result. The comparison result is the result of comparing the content in the third function page and the content in the fourth function page.

In one possible implementation, the receiving module 71 is also configured to: before receiving the first input of the user, receive the first information sent by the network device. In combination with FIG. 12, as shown in FIG. 14, the page switching apparatus 70 provided by the embodiments of this application can also include: a display module 74 and an operation module 75. The display module 74 is configured to: in response to the first information received by the receiving module 71, display prompt information corresponding to the first information, where the first information is used to indicate that the network signal strength of the page switching apparatus is less than or equal to the preset threshold. The receiving module 71 is also configured to receive a seventh input of the user, where the seventh input is an input performed by the user on the second label and the target label. The operation module 75 is configured to: in response to the seventh input received by the receiving module 71, run the application function corresponding to the second label and the application function corresponding to the target label, and cache content in the first function page and content in the second function page.

In one possible implementation, the page switching apparatus 70 provided in the embodiments of this application can also include: an obtaining module, a determining module, and a display module 74. The obtaining module is configured to: before receiving a first input of a user in a case that a first function page of a target application program is displayed and N first labels are displayed, obtain the second information. The second information includes at least one of the following: historical use information, network status information, and temperature information. The historical use information is used to indicate the user historical use status of the target application program, the network status information is used to indicate the current network status of the electronic device, and the temperature information is used to indicate the current temperature status of the electronic device. The determining module is configured to determine, according to the second information obtained by the obtaining module, display parameters of multiple first labels to be displayed. The display parameter includes at least one of the following: a number of the multiple first labels and a display sequence of the multiple first labels. The display module 74 is configured to display multiple first labels according to the display parameters determined by the determining module.

The page switching apparatus provided in this embodiment of this application can implement the processes that are implemented by the electronic device in the foregoing method embodiments. To avoid repetition, details are not described herein again.

The page switching apparatus in the embodiments of this application can be an apparatus, or a component, an integrated circuit, or a chip in an electronic device. The apparatus can be a mobile electronic device or a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in the embodiments of the present application.

The image processing apparatus in this embodiment of the present application may be an apparatus with an operating system. The operating system may be an Android (Android) operating system, may be an iOS operating system, or may be another possible operating system. This is not specifically limited in this embodiment of this application.

The embodiments of this application provide a page switching apparatus. Since the electronic device can display N first labels on the first function page and each of the first labels corresponds to an application function page of the target application program, the user can perform input on any one of the N first labels, so that the electronic device can quickly switch from the first function page to other application function pages of the target application program based on the user's input. Therefore, the user's operation can be simplified and time consumption can be reduced, thereby improving the efficiency of switching function pages in the application program in the electronic device.

Optionally, the embodiments of the present application further provide an electronic device, including a processor 110, a memory 109, and programs or instructions stored in the memory 109 and executable on the processor 110. When the programs or instructions are executed by the processor 110, the processes of the foregoing embodiment of the page switching method are implemented, and a same technical effect can be achieved. To avoid repetition, details are not described herein again.

It should be noted that the electronic device in this embodiment of this application includes the foregoing mobile electronic device and the foregoing non-mobile electronic device.

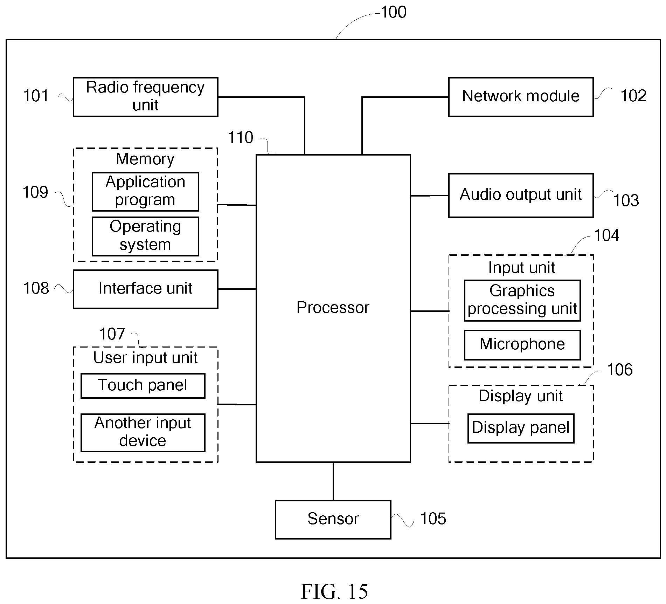

FIG. 15 is a schematic diagram of a hardware structure of an electronic device according to an embodiment of the present application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include the power supply (such as a battery) supplying power to each component. The power supply may be logically connected to the processor 110 by using a power management system, so as to implement functions such as charging management, discharging management and power consumption management by using the power management system. A structure of the electronic device shown in FIG. 15 does not constitute a limitation on the electronic device, and may include more or fewer parts than those shown in the figure, or combine some components, or have different part arrangements. Details are not described herein again.

The user input unit 107 is configured to receive a first input of a user in a case that a first function page of a target application program is displayed and N first labels are displayed, where the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1.

The processor 110 is configured to: in response to the first input, switch the first function page to a second function page, where the second function page is a function page of the first application function in the target application program, the first application function is one of M application functions corresponding to the target identifier, the target identifier is an identifier that corresponds to the target label and that is of the N first identifiers, and M is a positive integer.

The embodiments of this application provide an electronic device. Since the electronic device can display N first labels on the first function page and each of the first labels corresponds to an application function page of the target application program, the user can perform input on any one of the N first labels, so that the electronic device can quickly switch from the first function page to other application function pages of the target application program based on the user's input. Therefore, the user's operation can be simplified and time consumption can be reduced, thereby improving the efficiency of switching function pages in the application program in the electronic device.

Optionally, the user input unit 107 is also configured to: in a case that the first function page of the target application program is displayed, before the first input of the user is received, in a case that the first interface of the target application program is displayed, receive the second input of the user. The first interface includes K first identifiers, the K first identifiers include N first identifiers, the second input is an input performed by the user on N first identifiers of the K first identifiers, and K is an integer greater than N.

The processor 110 is also configured to create and display the N first labels in response to the second input.

The user input unit 107 is also configured to receive the third input of the user after the N first labels are created and displayed. The third input is an input performed by the user on the third label among N first labels.

The processor 110 is also configured to: in response to the third input, update the first interface to a second interface corresponding to the second identifier, and keep displaying the K first identifiers. The second identifier is an identifier corresponding to the third label. The second interface includes an identifier of at least one application function indicated by the second identifier.

The display unit 106 is configured to keep displaying the N first labels.

The user input unit 107 is also configured to receive the fourth input of the user after switching the first function page to the second function page. The fourth input is an input performed by the user on the fourth label among N first labels.

The display unit 106 is also configured to: in response to the fourth input, display, in a split screen manner, the second function page and the function page corresponding to the fourth label.

The user input unit 107 is also configured to receive the fifth input of the user after switching the first function page to the second function page. The fifth input is an input performed by the user on the fifth label among N first labels.

The processor 110 is also configured to: in response to the fifth input, create and display a sixth label corresponding to the fifth label. The third function page corresponding to the sixth label is the same as the fourth function page corresponding to the fifth label.

The user input unit 107 is also configured to receive a sixth input of the user.

The display unit 106 is also configured to update the content in the third function page and/or the content in the fourth function page in response to the sixth input, and switch the second function page to the updated third function page and fourth function page displayed in a split screen manner.

The processor 110 is also configured to compare content in the third function page with content in the fourth function page, and display the comparison result.

The input unit 104 is also configured to: before receiving the first input of the user, receive first information sent by the network device, and display prompt information corresponding to the first information, where the first information is used to indicate that the network terminal signal strength of the electronic device is less than or equal to the preset threshold.

The user input unit 107 is also configured to receive a seventh input of the user, where the seventh input is an input performed by the user on the second label and the target label.

The processor 110 is also configured to: in response to the seventh input, run the application function corresponding to the second label and the application function corresponding to the target label, and caches content in the first function page and content in the second function page.

The network module 102 is configured to: before receiving a first input of a user in a case that a first function page of a target application program is displayed and N first labels are displayed, obtain the second information. The second information includes at least one of the following: historical use information, network status information, and temperature information. The historical use information is used to indicate the user historical use status of the target application program, the network status information is used to indicate the current network status of the electronic device, and the temperature information is used to indicate the current temperature status of the electronic device.

The processor 110 is also configured to determine, according to the second information, display parameters of multiple first labels to be displayed. The display parameter includes at least one of the following: a number of the multiple first labels and a display sequence of the multiple first labels.

The display unit 106 is also configured to display multiple first labels according to the display parameters.

An embodiment of the present application further provides a readable storage medium. The readable storage medium stores a program or an instruction. When the program or instruction is executed by a processor, the processes of the foregoing embodiment of the page switching method are implemented, and a same technical effect can be achieved. To avoid repetition, details are not described herein again.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip, where the chip includes a processor and a communication interface, the communication interface is coupled to the processor, and the processor is configured to run a program or an instruction to implement the foregoing processes of the foregoing embodiment of the page switching method, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and apparatus in the embodiments of the present application is not limited to performing the functions in the order shown or discussed, but may also include performing functions in a substantially simultaneous manner or in the reverse order depending on the functions involved, for example, the methods described may be performed in an order different from that described, and various steps may also be added, omitted, or combined. In addition, features described with reference to some examples may be combined in other examples.

Through the description of the above embodiments, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations. The foregoing specific implementations are merely schematic instead of restrictive. Under enlightenment of this application, a person of ordinary skills in the art may make many forms without departing from aims of this application and the protection scope of claims, all of which fall within the protection of this application.

## Claims

1. A page switching method, comprising:
receiving a first input of a user in a case that a first function page of a target application program is displayed and N first labels are displayed, wherein each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1; and
in response to the first input, switching the first function page to a second function page, wherein the second function page is a function page of the first application function in the target application program, the first application function is one of M application functions corresponding to the target identifier, the target identifier is an identifier that corresponds to the target label and that is of the N first identifiers, and M is a positive integer.

2. The method according to claim 1, wherein the first application function is an application function meeting a preset condition among the M application functions; and
the preset condition comprises at least one of the following: an application function that keeps running among the M application functions, an application function that has been used for a time closest to the current system time among the M application functions, an application function that has been used for the most times among the M application functions, an application function that has been used the most frequently among the M application functions, and an application function that has been used for the longest time among the M application functions.

3. The method according to claim 1 or 2, wherein before the receiving a first input of a user in a case that a first function page of a target application program is displayed, the method further comprises:
in a case that a first interface of the target application program is displayed, receiving a second input of the user, wherein the first interface comprises K first identifiers, the second input is an input performed by the user on N first identifiers of the K first identifiers, and K is an integer greater than N; and
in response to the second input, creating and displaying the N first labels.

4. The method according to claim 3, wherein after the creating and displaying the N first labels, the method further comprises:
receiving a third input of the user, wherein the third input is an input performed by the user on a third label among the N first labels; and
in response to the third input, updating the first interface to a second interface corresponding to the second identifier, and keeping displaying the K first identifiers, wherein the second identifier is an identifier corresponding to the third label, and the second interface comprises an identifier of at least one application function indicated by the second identifier.

5. The method according to claim 1 or 2, wherein after the switching the first function page to a second function page, the method further comprises:
keeping displaying the N first labels;
receiving a fourth input of the user, wherein the fourth input is an input performed by the user on a fourth label among the N first labels; and
in response to the fourth input, displaying, in a split screen manner, the second function page and a function page corresponding to the fourth label.

6. The method according to claim 1 or 2, wherein after the switching the first function page to a second function page, the method further comprises:
receiving a fifth input of the user, wherein the fifth input is an input performed by the user on a fifth label among the N first labels;
in response to the fifth input, creating and displaying a sixth label corresponding to the fifth label, wherein the third function page corresponding to the sixth label is the same as the fourth function page corresponding to the fifth label;
receiving a sixth input of the user; and
updating the content in the third function page and/or the content in the fourth function page in response to the sixth input, switching the second function page to the updated third function page and fourth function page displayed in a split screen manner, and displaying the comparison result, wherein the comparison result is the result of comparing the content in the third function page and the content in the fourth function page.

7. The method according to claim 1 or 2, wherein before the receiving a first input of a user, the method further comprises:
receiving first information sent by the network device, and displaying prompt information corresponding to the first information, wherein the first information is used to indicate that the network terminal signal strength of the electronic device is less than or equal to the preset threshold;
receiving a seventh input of the user, wherein the seventh input is an input performed by the user on the second label and the target label; and
in response to the seventh input, running the application function corresponding to the second label and the application function corresponding to the target label, and caching content in the first function page and content in the second function page.

8. The method according to claim 1, wherein before the receiving a first input of a user in a case that a first function page of a target application program is displayed and N first labels are displayed, the method further comprises:
obtaining second information, wherein the second information comprises at least one of the following: historical use information, network status information, and temperature information, wherein the historical use information is used to indicate the user historical use status of the target application program, the network status information is used to indicate the current network status of the electronic device, and the temperature information is used to indicate the current temperature status of the electronic device;
determining, according to the second information, display parameters of multiple first labels to be displayed, wherein the display parameter comprises at least one of the following: a number of the multiple first labels and a display sequence of the multiple first labels; and
displaying the multiple first labels according to the display parameters.

9. A page switching apparatus, comprising a receiving module and a switching module; wherein
the receiving module is configured to receive a first input of a user in a case that a first function page of a target application program is displayed and N first labels are displayed, wherein the first function page displays the N first labels, each first label corresponds to a first identifier in the target application program, each first identifier is used to indicate at least one application function in the target application program, the first function page is a function page of an application function run through a second label of the N first labels, the first input is an input performed by the user on a target label of the N first labels, and N is an integer greater than 1; and
the switching module is configured to: in response to the first input received by the receiving module, switch the first function page to a second function page, wherein the second function page is a function page of the first application function in the target application program, the first application function is one of M application functions corresponding to the target identifier, the target identifier is an identifier that corresponds to the target label and that is of the N first identifiers, and M is a positive integer.

10. The page switching apparatus according to claim 9, wherein the first application function is an application function meeting a preset condition among the M application functions; and
the preset condition comprises at least one of the following: an application function that keeps running among the M application functions, an application function that has been used for a time closest to the current system time among the M application functions, an application function that has been used for the most times among the M application functions, an application function that has been used the most frequently among the M application functions, and an application function that has been used for the longest time among the M application functions.

11. The page switching apparatus according to claim 9 or 10, wherein the receiving module is also configured to: in a case that the first function page of the target application program is displayed, before the first input of the user is received, in a case that the first interface of the target application program is displayed, receive the second input of the user, wherein the first interface comprises K first identifiers, the K first identifiers comprise N first identifiers, the second input is an input performed by the user on N first identifiers of the K first identifiers, and K is an integer greater than N;
the page switching apparatus also comprises a creation module and a display module;
the creation module is configured to create N first labels in response to the second input received by the receiving module; and
the display module is configured to display the N first labels created by the creation module.

12. The page switching apparatus according to claim 11, wherein the receiving module is also configured to receive the third input of the user after the N first labels are created and displayed, wherein the third input is an input performed by the user on the third label among N first labels; and
the display module is also configured to: in response to the third input received by the receiving module, update the first interface to a second interface corresponding to the second identifier, and keep displaying the K first identifiers, wherein the second identifier is an identifier corresponding to the third label, and the second interface comprises an identifier of at least one application function indicated by the second identifier.

13. The page switching apparatus according to claim 9 or 10, further comprising: a display module;
the display module is configured to keep displaying the N first labels;
the receiving module is also configured to receive the fourth input of the user after switching the first function page to the second function page, wherein the fourth input is an input performed by the user on the fourth label among N first labels; and
the display module is also configured to: in response to the fourth input received by the receiving module, display, in a split screen manner, the second function page and the function page corresponding to the fourth label.

14. The page switching apparatus according to claim 9 or 10, wherein the receiving module is also configured to receive a fifth input of the user after switching the first function page to the second function page, wherein the fifth input is an input of the user on the fifth label among N first labels;
the page switching apparatus also comprises a creation module and a display module;
the creation module is configured to: in response to the fifth input received by the receiving module, create a sixth label corresponding to the fifth label, wherein the third function page corresponding to the sixth label is the same as the fourth function page corresponding to the fifth label;
the display module is configured to display the sixth label created by the creation module;
the receiving module is also configured to receive a sixth input of the user;
the display module is also configured to update the content in the third function page and/or the content in the fourth function page in response to the sixth input received by the receiving module, switch the second function page to the updated third function page and fourth function page displayed in a split screen manner, and display the comparison result; and
the comparison result is a result of comparing the content in the third function page and the content in the fourth function page.

15. The page switching apparatus according to claim 9 or 10, wherein the receiving module is also configured to: before receiving the first input of the user, receive first information sent by the network device;
the page switching apparatus also comprises: a display module and an operation module;
the display module is configured to: in response to first information sent by the network device, display prompt information corresponding to the first information, wherein the first information is used to indicate that the network terminal signal strength of the page switching apparatus is less than or equal to a preset threshold;
the receiving module is also configured to receive a seventh input of the user, wherein the seventh input is an input performed by the user on the second label and the target label; and
the operation module is configured to run the application function corresponding to the second label and the application function corresponding to the target label in response to the seventh input received by the receiving module, and cache the contents of the first function page and the second function page.

16. The page switching apparatus according to claim 9, further comprising: an obtaining module, a determining module, and a display module;
the obtaining module is configured to: before receiving a first input of a user in a case that a first function page of a target application program is displayed and N first labels are displayed, obtain the second information, wherein the second information comprises at least one of the following: historical use information, network status information, and temperature information, the historical use information is used to indicate the user historical use status of the target application program, the network status information is used to indicate the current network status of the electronic device, and the temperature information is used to indicate the current temperature status of the electronic device;
the determining module is configured to determine, according to the second information obtained by the obtaining module, display parameters of multiple first labels to be displayed, wherein the display parameter comprises at least one of the following: a number of the multiple first labels and a display sequence of the multiple first labels; and
the display module is configured to display multiple first labels according to the display parameters determined by the determining module.

17. An electronic device, comprising a processor, a memory, and programs or instructions stored in the memory and executable on the processor, wherein when the programs or instructions are executed by the processor, the steps of the page switching method according to any one of claims 1 to 8 are performed.

18. A readable storage medium, storing programs or instructions, wherein when the programs or instructions are executed by the processor, the steps of the page switching method according to any one of claims 1 to 8 are performed.

19. A chip, comprising a processor and a communications interface, wherein the communications interface is coupled with the processor, and the processor is configured to run programs or instructions to implement the steps of the page switching method according to any one of claims 1 to 8.
